Europäisches Patentamt

European Patent Office

Office européen des brevets

(11) Publication number: **0 247 787**
**A2**

## (12) EUROPEAN PATENT APPLICATION

(21) Application number: **87304486.1**

(22) Date of filing: **20.05.87**

(51) Int. Cl.⁴: **G11B 5/008** , G11B 5/024 ,
G11B 15/07

(30) Priority: **24.05.86 JP 119988/86**

(43) Date of publication of application:
**02.12.87 Bulletin 87/49**

(84) Designated Contracting States:
**DE FR GB NL**

(71) Applicant: **SONY CORPORATION**
**7-35 Kitashinagawa 6-Chome Shinagawa-ku**
**Tokyo 141(JP)**

(72) Inventor: **Nemoto, Shoji c/o Patents Division**
**Sony Corporation 6-7-35 Kitashinagawa**
**Shinagawa-ku Tokyo 141(JP)**
Inventor: **Kobayashi, Kenji c/o Patents**
**Division**
**Sony Corporation 6-7-35 Kitashinagawa**
**Shinagawa-ku Tokyo 141(JP)**
Inventor: **Katsumoto, Toru c/o Patents**
**Division**
**Sony Corporation 6-7-35 Kitashinagawa**
**Shinagawa-ku Tokyo 141(JP)**
Inventor: **Murabayashi, Noboru c/o Patents**
**Division**
**Sony Corporation 6-7-35 Kitashinagawa**
**Shinagawa-ku Tokyo 141(JP)**

(74) Representative: **Cotter, Ivan John et al**
**D. YOUNG & CO. 10 Staple Inn**
**London WC1V 7RD(GB)**

(54) Tape recorders having flying erase heads.

(57) A tape recorder has a flying erase head (FEH) and is capable of use with a plurality of types of recording tape. The tape recorder includes a detector (23) for detecting the type of a recording tape loaded in the tape recorder and operative to provide a control signal corresponding to the detected type of recording tape, a current source (21) for supplying an erase current having a characteristic which is such as to drive the flying erase head so as to erase signals recorded on the recording tape, and a controller (22) which is connected to the current source and is operative to adjust the characteristic of the erase current to the type of recording tape loaded in the tape recorder in response to the control signal.

FIG.4

## TAPE RECORDERS HAVING FLYING ERASE HEADS

This invention relates to tape recorders having flying erase heads.

There has been an increasing demand for helical scan home video recorders having a flying erase head rather than a full erase head in order to join old and new video signals without noise. This tendency is evident particularly in the field of 8 mm video tape recorders. Normally, such a flying erase head is affixed on the circumference of a rotary drum, having a length of recording tape wrapped thereabout, at a position 90 degrees advanced with respect to a first channel record/playback head which is affixed on the circumference of the drum at a position diametrically opposite to a second channel record/playback head. During each recording cycle, the flying erase head erases old (previously recorded) signals on two adjacent tracks. The first channel record/playback head follows the flying erase head with a 90 degree delay to record a first channel signal on the preceding one of the tracks which have been erased by the flying erase head. Upon completion of recording of the first channel signal, the second channel record/playback head, which follows the first record/playback head with a 180 degree delay, starts recording a second channel signal on the successive one of the tracks.

In order to erase old video signals completely without the flying erase head having any influence on the new second channel signal recorded on the successive or second channel track, the flying erase head should be driven with an erase current having a proper amplitude. If the erase current amplitude is smaller than the proper level, the flying erase head will fail completely to erase the old video signals, causing noise which is superimposed on the new video signals. An erase current amplitude greater than the proper level will cause magnetic flux leakage to tend to attenuate the new video signal recorded on the second channel track with which the flying erase head moves in close proximity.

According to the present invention there is provided a tape recorder for use with a plurality of types of recording tape, the tape recorder comprising:

a rotary drum having a flying erase head affixed thereon;

a detector for detecting the type of a recording tape loaded in the tape recorder and operative to provide a control signal corresponding to the detected type of recording tape;

a current source for supplying an erase current having a characteristic which is such as to drive the flying erase head so as to erase signals recorded on the recording tape; and

a controller connected to the current source, the controller being responsive to said control signal to adjust said characteristic of the erase current to the type of recording tape loaded in the tape recorder.

Such a tape recorder can drive the flying erase head with an erase current adjusted to the type of the recording tape loaded in the tape recorder, thereby enabling proper operation with different types of recording tape.

The invention will now be further described, by way of illustrative and non-limiting example, with reference to the accompanying drawings, in which like references identify like elements throughout the several figures, and in which:

Figure 1 is a plan view of a head and drum configuration of a previously proposed flying erase head tape recorder;

Figure 2 is a fragmentary enlarged plan view showing a series of successive tracks on a recording tape;

Figure 3 is a graph of erasing ratio versus erase current for different types of recording tape;

Figure 4 is a schematic block diagram of a flying erase head tape recorder according to a preferred embodiment of the invention; and

Figure 5 is a bottom view of a tape cassette.

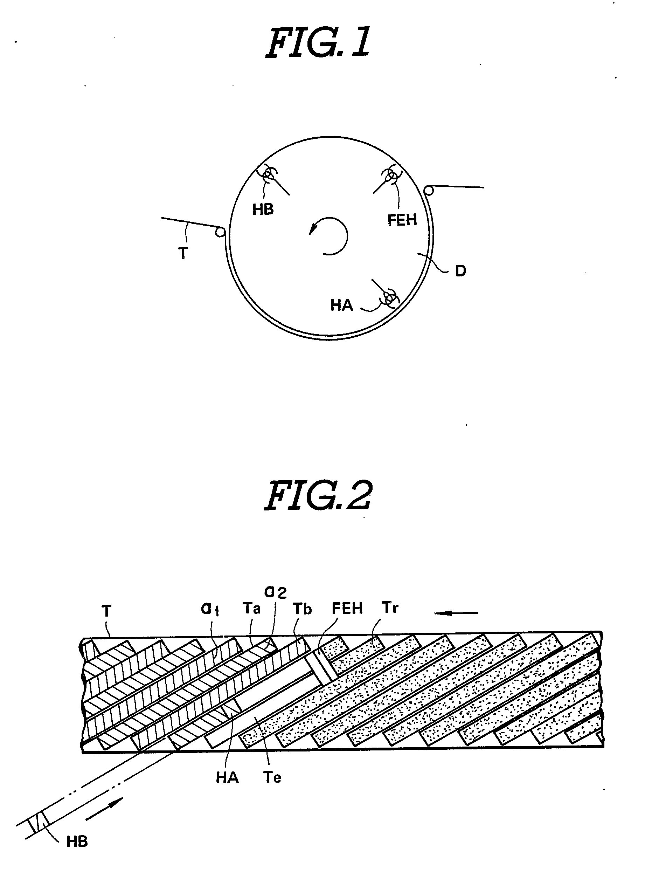

Prior to a description being given of a preferred embodiment of the present invention, a previously proposed flying erase head tape recorder will be described with reference to Figures 1 and 2 in order to provide an understanding of difficulties associated therewith.

Referring to Figure 1, a rotary drum D, which is rotatable in a direction indicated by an arrow, carries a first record/playback head HA at a first position along its circumference and a second record/playback head HB at a second position along its circumference, the second position being diametrically opposite to the first position. A length of recording tape T is transported past the rotary drum D such that it is in proximity with approximately 221° of the drum and slightly skewed with respect to the drum such that the heads HA and HB scan the tape in helical fashion. The angle over which the recording tape T is wrapped about the circumference of the rotary drum D is about 40° greater than is required in normal two-head helical scan video tape recorders for the purpose of PCM audio recording. The first record/playback head HA has a recording gap skewed at an acute angle from normal (that is, skewed at an acute angle with respect to the direction of movement of the head) in a first direction and the second record/playback head HB has a recording gap skewed at an acute angle from normal in the other direction. A flying erase head FEH is carried by the rotary drum at a third position along its circumference which is advanced by 90 degrees in the direction of rotation of the rotary drum D with respect to the first record/playback head HA. The flying erase head FEH has an erasing gap of 40 micrometres to permit simultaneous erasing of two adjacent tracks.

The operation of the previously proposed tape recorder will now be described with reference to Figure 2, which is a fragmentary enlarged plan view showing a series of successive tracks on the recording tape T. During recording, the first record/playback head HA is driven by a first channel (CH1) video signal to record it on odd or CH1 tracks Ta and the second record/playback head HB is driven by a second channel (CH2) signal to record it on even or CH2 tracks Tb. The flying erase head FEH is driven by an erase current to erase two adjacent tracks. In Figure 2, the dotted areas indicate tracks having old signals previously recorded thereon, the white areas indicate tracks erased by the flying erase head FEH, and the hatched areas indicate tracks having new signals newly recorded thereon by the first and second record/playback heads HA and HB. The new signals recorded by the first and second record/playback heads HA and HB, such as signals illustrated diagrammatically at a1 and a2, respectively, are skewed in opposite directions.

As the rotary drum D rotates, the flying erase head FEH erases old signals on two adjacent tracks. The first record/playback head HA follows the flying erase head FEH with a 90 degree delay to record the CH1 signal on the preceding one of the two adjacent tracks which have been erased by the flying erase head FEH. During the period between the time at which the first record/playback head HA approaches the leading edge of the preceding track and the time at which it approaches the trailing edge thereof, the recording tape T is transported forward a distance corresponding to the pitch at which the tracks are arranged. Therefore, the second record/playback head HB, which follows the first record/playback head HA with a 180 degree delay, approaches the leading edge of the successive one of the two adjacent tracks which have been erased by the flying erase head FEH and starts recording the CH2 signal thereon when the first record/playback head HA approaches the trailing edge of the preceding track.

In order to erase old video signals in a proper manner, the flying erase head should be driven with an erase current having a proper frequency and an amplitude (peak-to-peak value) within a proper range. If the erase current amplitude is smaller than the proper range, the flying erase head FEH will fail to erase the video signals completely, causing noise which is superimposed on new video signals. An erase current amplitude greater than the proper range will cause magnetic flux leakage to tend to attenuate the new video signals recorded on even tracks Tb with which the flying erase head FEH moves in close proximity.

By way of example, the flying erase head FEH is driven with a high-frequency (several megahertz) erase current having an amplitude of several thousand milliamperes in order to erase video signals recorded on a metal powder (MP) recording tape which is normally used with video tape recorders.

Such a metal powder recording tape housed in an 8 mm video tape cassette has a recording time limited to two hours in a short play (SP) mode and four hours in a long play (LP) mode. Any attempt to increase the recording time by increasing the length of the metal powder recording tape is impeded by an inability to decrease its thickness. In order to overcome this problem associated with metal powder recording tapes, the applicants intend to provide metal evaporated (ME) recording tapes, the thickness of which can be decreased to a great extent as compared to metal powder recording tapes.

Metal evaporated recording tapes have magnetic characteristics different from metal powder recording tapes and they require a smaller erasing current than is required to erase old signals recorded on metal powder recording tapes. Therefore, if a metal evaporated recording tape is loaded in a tape recorder in which the erase current is set at a value appropriate for metal powder recording tapes, magnetic flux leakage from the flying erase head takes place and attenuates the new video signals recorded on even tracks Tb with which the flying erase head FEH moves in close proximity.

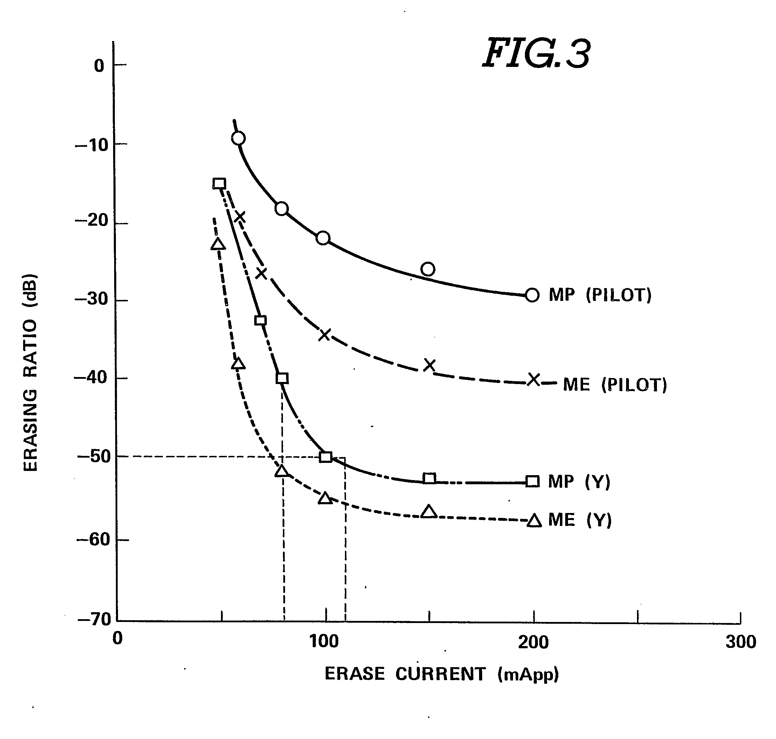

Figure 3 shows the effect of the magnitude (in mA peak-to-peak) of the erase current on the erasing ratio (in dB) for pilot signals (PILOT) and luminance signals (Y) recorded on metal powder (MP) and metal evaporated (ME) recording tapes. It can be seen from Figure 3 that the erase current magnitude suitable for driving the flying erase head so as to erase the pilot signal (PILOT) by an amount of 20 dB or more and to erase the luminance signal (Y) by an amount of 50 dB or more is about 110 mA for metal powder (MP) recording tapes and about 80 mA for metal evaporated (ME) recording tapes.

Thus, signals newly recorded on a metal evaporated recording tape will be partially erased, due to leakage of magnetic flux from the flying erase head, if the erase head is driven with an erase current having a relatively great magnitude (about 110 mA) suitable for erasing signals on a metal powder recording tape. On the other hand, if a metal powder recording tape is loaded in a video tape recorder in which the flying erase head is driven with an erase current having a relatively small magnitude (about 80 mA) suitable for erasing signals on a metal evaporated recording tape, the flying erase head will fail to erase completely the signals recorded on the metal powder recording tape. That is, about 10 dB of the luminance signal (Y) remains unerased, as it shown in Figure 3.

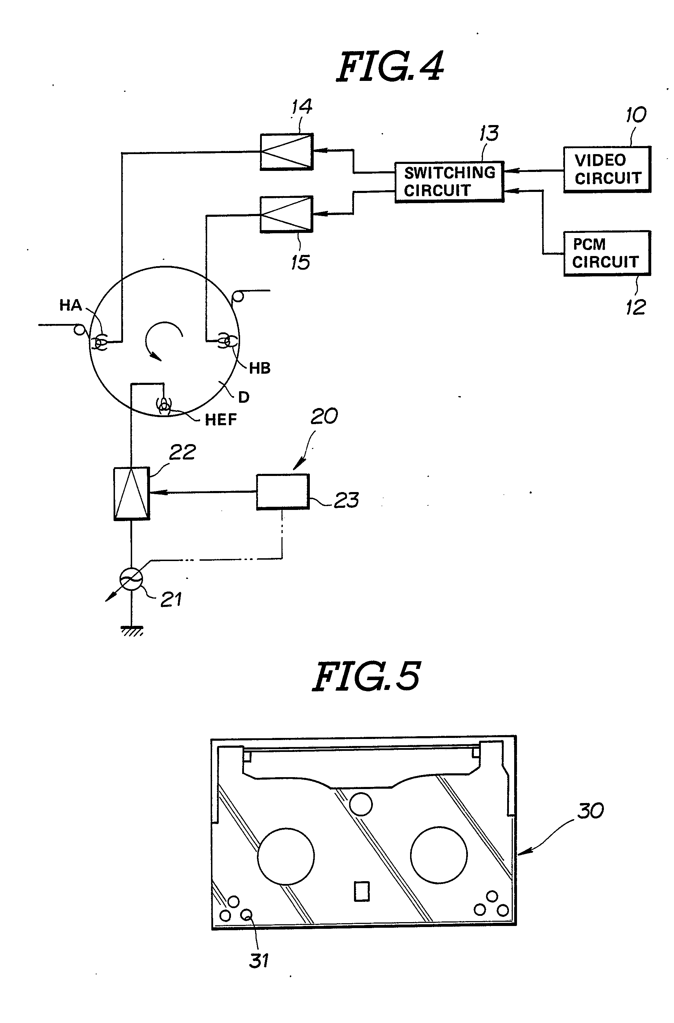

Figure 4 shows a flying erase head tape recorder embodying the invention. While Figure 4 illustrates a video tape recorder, the invention is equally applicable to other tape recorders having a flying erase head.

The tape recorder is shown as having three heads HA, HB and FEH affixed on the circumference of a rotary drum D in the same manner as described with reference to Figure 1. That is, the first record/playback head HA is affixed at a first position diametrically opposite to a second position at which the second record/playback head HB is affixed to the rotary drum D. The flying erase head FEH is affixed on the circumference of the rotary drum D at a position advanced by 90 degrees in the direction of rotation of the rotary drum D with respect to the position of the first record/playback head HA.

The tape recorder includes a video circuit 10 and a PCM circuit 12. The video circuit 10 produces a video signal including a low-frequency band colour signal having a frequency of 743.444 kilohertz, a frequency modulated (FM) audio signal having a frequency of 1.5 megahertz, an FM luminance signal having a frequency of several megahertz, and a tracking pilot signal having a frequency of about 100 kilohertz. The PCM circuit 12 produces a PCM audio signal. The outputs of the video and PCM circuits 10 and 12 are coupled to a switching circuit 13 which switches between a first position and a second position in response to an appropriate timing signal. In the first position, the video signal is applied through an amplifier 14 to drive the first record/playback head HA so as to record the video signal on a first channel track portion assigned to the video signal and the PCM audio signal is applied through an amplifier 15 to drive the second record/playback head HB so as to record the PCM audio signal on a second channel track portion assigned to the PCM audio signal. In the second position, the video signal is applied through the amplifier 15 to drive the second record/playback head HB so as to record the video signal on a second channel track portion assigned to the video signal and the PCM audio signal is applied through the first amplifier 14 to drive the first record/playback head HA so as to record the PCM audio signal on a first channel track portion assigned to the PCM audio signal.

The video tape recorder also includes an erase current control circuit 20 which comprises a current generator 21, an amplifier 22, and a tape type detector 23. The tape type detector 23 detects the type of recording tape loaded in the video tape recorder and generates a control signal corresponding to the detected recording tape type. The current generator 21 generates a high frequency current having a predetermined frequency of, for example, 5 megahertz. The output of the current generator 21 is coupled to the flying erase head FEH through the amplifier 22 which has a variable degree of amplification (gain). The amplifier 22 receives the control signal from the tape type detector 23 and correspondingly changes its degree of amplification so as to adjust the amplitude of the erase current to the flying erase head FEH to have a value suitable for the type of recording tape loaded in the video tape recorder. In more detail, when the loaded recording tape is a metal powder recording tape the amplifier 22 sets its degree of amplification to have a relatively large value so as to set the erase current amplitude to a relatively large value, and when the loaded recording tape is a metal evaporated recording tape the amplifier sets its degree of amplification to have a relatively small value so as to set the erase current amplitude to a relatively small value.

This, as explained above, the video tape recorder described with reference to Figure 4 can adapt itself automatically for use with a plurality of types of recording tape having different magnetic characteristics.

Although the erase current control circuit 20 has been described as controlling the erase current supplied to the flying erase head by changing the amplitude of the erase current, it is to be noted that the erase current control circuit may be modified, as indicated by a chain-dotted line in Figure 4, to achieve the same result by changing the frequency of the erase current supplied to the flying erase head FEH. In this case, the current generator 21 is replaced with a current generator operative to generate a high frequency current having a frequency that changes in response to the control signal fed thereto from the tape type detector 23, and the amplifier 22 is replaced with an amplifier having a fixed degree of amplification (gain).

Figure 5 shows an example of a way in which the tape type detector 23 can detect the type of the recording tape loaded into the video tape recorder. A tape cassette 30, which houses a recording tape, has a plurality of holes formed on its bottom surface. One of the holes is assigned to act as a detection hole 31 used for providing an indication of the type of recording tape housed in the cassette 30. The tape type detector 23 detects the presence of the detection hole 31 in a mechanical or optical manner when the tape cassette 30 is loaded into the video tape recorder. For example, the detection hole 31 may be closed when the recording tape is a metal powder recording tape and open when the recording tape is a metal evaporated recording tape. It is to be noted, however, that the tape type detector 23 may be arranged to detect the type of loaded recording tape in an electrical manner if there an electrical or magnetic indication thereof is provided on the tape cassette 30.

**Claims**

1. A tape recorder for use with a plurality of types of recording tape, the tape recorder comprising:

a rotary drum (D) having a flying erase head (FEH) affixed thereon;

a detector (23) for detecting the type of a recording tape loaded in the tape recorder and operative to provide a control signal corresponding to the detected type of recording tape;

a current source (21) for supplying an erase current having a characteristic which is such as to drive the flying erase head so as to erase signals recorded on the recording tape; and

a controller connected to the current source, the controller being responsive to said control signal to adjust said characteristic of the erase current to the type of recording tape loaded in the tape recorder.

2. A tape recorder according to claim 1, wherein said characteristic of the erase current comprises an amplitude thereof and the controller includes means (22) connected between the current source (23) and the flying erase head (FEH) for adjusting the erase current amplitude in accordance with said control signal.

3. A tape recorder according to claim 2, wherein said means (22) connected between the current source (23) and the flying erase head (FEH) comprises an amplifier circuit having a variable degree of amplification, the controller including means responsive to said control signal to adjust the degree of amplification of the amplifier circuit to adjust the amplitude of the erase current.

4. A tape recorder according to claim 2 or claim 3, wherein the controller is operative to cause the erase current amplitude to adopt a first predetermined value when a metal powder recording tape is loaded in the tape recorder and to adopt a second predetermined value, less than the first predetermined value, when a metal evaporated tape is loaded in the tape recorder.

5. A tape recorder according to claim 1, wherein said characteristic of the erase current comprises a frequency thereof and the controller includes means for adjusting the frequency of the erase current in accordance with said control signal.

6. A tape recorder according to any one of claims 1 to 5, for use with a recording tape housed in a tape cassette (30) having a detection hole (31) corresponding to the type of the recording tape, wherein the detector (23) comprises means for producing said control signal according to the presence of the detection hole.

7. A tape recorder according to any one of claims 1 to 5, for use with recording tapes housed in tape cassettes (30) having detection holes (31) which are closed when the recording tape housed therein is a metal powder tape and open when the recording tape housed therein is a metal evaporated tape, wherein the detector (23) comprises means responsive to a detection hole (31) in a cassette loaded (30) in the tape recorder being closed or open to provide a control signal corresponding to a metal powder tape or a metal evaporated tape, respectively.

## FIG.1

## FIG.2

*FIG.3*

ERASING RATIO (dB)

ERASE CURRENT (mApp)

MP (PILOT)

ME (PILOT)

MP (Y)

ME (Y)

0 247 787

# FIG.4

# FIG.5